# EUROPEAN PATENT SPECIFICATION

(11) **EP 2 167 551 B1**
(45) Date of publication and mention of the grant of the patent: **22.12.2010**
(21) Application number: 08758721.8
(22) Date of filing: 21.05.2008
(51) Int. Cl.: C08F 10/02, C08F 4/60, C08K 5/09

(54) **ETHYLENE POLYMER COMPOSITION**
ETHYLENPOLYMERZUSAMMENSETZUNG
COMPOSITION À BASE DE POLYMÈRE D'ÉTHYLÈNE

(30) Priority: 25.05.2007 EP 07010464
(43) Date of publication of application: 31.03.2010
(73) Proprietor: Saudi Basic Industries Corporation, 11422 Riyadh (SA)
(72) Inventor: SENGUPTA, Pratip, NL-6160 GA Geleen (NL); GROENEBOOM, Robert, Harm, NL-6160 GA Geleen (NL); DE VOS, Roelof, Franciscus, Gerardus, Maria, NL-6160 GA Geleen (NL); MARTENS, Johannes, Peter, Antonius, NL-6160 GA Geleen (NL)
(74) Representative: Zuideveld, Mihaela
(86) International application number: PCT/EP2008/004125
(87) International publication number: WO 2008/145304

(56) References cited:
- EP-A- 1 153 943
- WO-A-2005/111091
- GB-A- 802 460
- US-A- 4 814 367

## Description

The invention relates to an ethylene polymer composition comprising an ethylene polymer obtained in the presence of a chromium-based catalyst system

Ethylene polymers and methods to produce those are generally known in the art (see "Handbook of Polyethylene, structure, properties and applications "by Andrew Peacock, Dekker, New York, 2000). Processes to obtain polyethylene, such as for example high density polyethylene, low density polyethylene or linear low density polyethylene, include for example gas-phase, solution phase and slurry-phase polymerization processes.

With respect to high density polyethylene (HDPE) the structure of the polymer is influenced by a combination of the catalyst and the reaction conditions. HDPE is mostly produced by polymerisation in the presence of a Ziegler-Natta type catalyst or a chromium oxide catalyst via the slurry loop process. These different processes are disclosed in "Handbook of Polyethylene, structure, properties and applications "(by Andrew Peacock, Dekker, New York, 2000; pages 54 and 61-62).

HDPE can be processed, for example extruded, blow moulded, injection moulded or rotation moulded, into articles such as for example containers, fuel tanks and drums, bottles for household and chemicals, jerry cans, intermediate bulk containers and films.

In many of these applications, it is desirable that the resins are naturally white. However some of the commonly used additives lead to discoloration of the polyethylene. Discoloration is a complex phenomenon and depends on many factors, including for example catalyst residues and stabilizers. Catalyst residues of chromium-based catalysts include the respective catalyst and corresponding catalyst decomposition products. Current methods for improving the stability of polyethylene typically involve the use of one or more stabilizers and anti oxidants such as for example organo phosphites and organo phosphonites, sterically hindered phenolic antioxidants and amines (Handbook of Polymer Degradation; Halim Hamid; Second Edition pages 258-259). The use of these additives may be successful for many applications requiring processing and long term stability; however these additives strongly contribute to the discoloration of polymers. Particularly the combination of a phenolic antioxidant and the polymerization catalyst residue results in problems related to colour (Handbook of Polymer Degradation; Halim Hamid; Second Edition page 87).

The selection of the stabilizer depends on the type of catalyst and the type of production process. For example chromium oxide catalyst based polyethylene and titanium based Ziegler-Natta type polyethylene contain different transition metals which influence the degradation process. These types of catalysts show different problems and need different solutions for their specific problems. There is still a need for efficient means to deactivate catalyst residues, without significantly altering the processing properties and/or the final chemical and physical properties of chromium catalyst based polyethylene.

It is an object of the present invention to reduce the yellow discoloration of an ethylene composition comprising chromium catalyst based polyethylene having a density ranging between 940 kg/m³ and 970 kg/m³.

The object is achieved with an ethylene polymer composition that comprises a carboxylic acid and /or a magnesium salt of a carboxylic acid and the compositon does not comprise a polyol.

These acids and salts act as a whitening agent and they improve the colour performance of the ethylene polymer composition comprising the chromium catalyst based polyethylene.

The colour (b*- value) of the polyethylene is measured according to CIE-lab (ASTM D 6290-98 and ASTM 313-00).

The b*-value of the polyethylene composition comprising a carboxylic acid and /or a magnesium salt of a carboxylic acid is < 0 whereas the b*-value of the polyethylene composition without the addition of said whiteners is > 0.

Furthermore, determination of the ageing of the pressed plaques shows that the b*-value for the polyethylene composition with said whitening agents is < 0.8 whereas the b*-value for the polyethylene composition without said whitening agents is > 1.0. (b*-value determined after 5 days and temperature 55 °C; according to ASTM D6290).

It is a further advantage of the invention that the carboxylic acid and /or the magnesium salt of a carboxylic acid do not influence the taste or odour imparted by the polymer to foodstuffs packaged using the polymer composition.

Suitable carboxylic acids include mono-, di -, or tricarboxylic acids and suitable magnesium salts include magnesium salts of the mono-, di-, or tricarboxylic acid. Also mixtures of these acids and these salts are possible.

Preferably the acids and salts have a melting point less than 190°C.

According to a preferred embodiment of the invention the monocarboxylic acid is an acid according to CH₃ (CH₂)ₙCOOH wherein n ≥ 0 , the dicarboxylic acid is an acid according to HOOC(CH₂)ₘCOOH wherein m ≥ 0 and the tricarboxylic acid is citric acid.

The carboxylic acid and salt may be saturated or unsatured.

Preferably the acid and the salt are saturated compounds.

Preferably the carboxylic acid is selected from the group consisting of saturated carboxylic acids of 1 to 40 carbon atoms.

According to a preferred embodiment of the invention the carboxylic acid is selected from the group consisting of saturated carboxylic acids of 1 to 22 carbon atoms.

Suitable acids include for example formic acid, acetic acid, propionic acid, butyric acid, valeric acid, caproic acid, caprylic acid, capric acid, pelargonic acid, myristic acid, lauric acid, palmitic acid, stearic acid, and/or behenic acid.

According to a preferred embodiment of the invention the carboxylic acid is stearic acid or acetic acid.

According to a preferred embodiment of the invention the acid salt is magnesium stearate or magnesium acetate.

Most preferably magnesium stearate is applied.

Generally the amount of the whitener is sufficient to improve the colour of the pellets ranges between 1 - 5000 ppm relative to the ethylene polymer.

According to a preferred embodiment of the invention the amount of the whitener ranges between 100 and 1000 ppm relative to the ethylene polymer and more preferably the amount of the whitener ranges between 250 and 600 ppm relative to the ethylene polymer.

According to a preferred embodiment of the invention the polyethylene composition also comprises a phenolic antioxidant. Suitable phenolic compounds include for example tetrakis (methylene 3, 5-di-t-butyl-4-hydroxy hydro cinnamate) methane (Irganox 1010 of Ciba), octadecyl 3,5-di-t-butyl-4-hydroxy hydrocinnamate (Irganox 1076 of Ciba) and/or 2,6-di-ter-butyl 4-methyl phenol (Lowinox BHT of Chemtura).

The antioxidant may be added in an amount between for example 100-3000 ppm relative to the ethylene polymer.

Furthermore the composition may contain a processing stabilizer for example tris (2, 4-ditert-butylphenyl) phosphite (for example Irgafos 168 of Ciba) or tris nonylphenyl phosphite (for example DOVERPHOS 4 of Dover Chemical) or a combination of phenolic antioxidants and phosphite based processing stabilisers.

The processing stabilizer may be added in an amount between for example 100-3000 ppm relative to the ethylene polymer.

Generally a carboxylic acid and /or a magnesium salt of a carboxylic acid are blended with the polyethylene, if desired also with other additives, in an amount sufficient to improve the colour of the resulting pellets prior to pelletizing in an extruder. The additives are added in an amount from 100 to 2000 ppm. The improved colour is seen in extruded granules and compression moulded plaques made from the granules. The colour stability of the materials upon processing can be simulated with ageing of the granules and compression moulded plaques. The use of the whitening agents according to the invention results in the improvement in colour also after processing. The increase in discoloration upon ageing is significantly reduced.

The composition according to the invention preferably comprises a polyethylene obtained by polymerisation in the presence of chromium oxide catalyst on a support.

Generally, the support is silica. The support may be modified so as to include cogels such as for example silica-titanium or silica-alumina and by the replacement of silica by alumina or amorphous aluminium phosphates. Furthermore, the support may comprise a tergel which is produced by mixing a chromium source with the silica and titanium compound. The chromium-containing catalyst may also be doped with chemical compounds containing for example aluminium, titanium, phosphorus, boron or fluor by impregnation of the porous chromium-containing supports with solutions of such compounds.

The present invention also relates to ethylene copolymers based on ethylene and at least one olefin co monomer having between three and ten carbon atoms per molecule such as, for example, propylene, 1-butene, 1-pentene, 4-methylpentene, 1-hexene and/or 1-octene.

Preferred co monomers are butene and hexene.

The polymer may be obtained by polymerisation in a single reactor in the presence of a silica-supported chromium-containing catalyst and an alkyl-containing promoter for example alkyl boron compound such as for example triethyl boron.

The polyethylene has the following characteristics:
- a density ranging between 940 kg/m³ and 970 kg/m³ (according to ISO1183),
- a high-load melt index (HLMI) between 0 and 50g/10 min ( according to ISO 1133) and
- M_{w} / Mₙ between 8 and 50 (according to size exclusion chromatography (SEC) measurement).

The ESCR is higher than 5 hours (according to the DSM method STAC 100-1106).

Generally the polymerization of ethylene takes place in a diluent at a temperature of between 90°C and 110°C. Suitable diluents include, for example, isobutane and propane. The polymerization may also take place in a gas-phase process. The amount of chromium in the catalyst is generally at least 0.5 % by weight and preferably at least 1.0 wt%.

Generally, the chromium catalyst is activated before being applied in the polymerization reaction. The activation may take place under different conditions. The activation generally takes place at an elevated temperature, for example, at a temperature above 450°C. The activation may take place in different atmospheres, for example in dry air.

The high density polyethylene compositions according to the present invention may for example be extruded, blow moulded, injection moulded or rotation moulded into articles such as, for example, bottles, containers, fuel tanks and drums, bottles for household and chemicals, jerry cans, intermediate bulk containers and may be blown into films. The compositions may also contain additives such as for example lubricants, fillers, process stabilisers, UV stabilisers, antioxidants, compatibilizers, antistatic agents, processing aids and pigments.

According to a preferred embodiment of the invention the polymer composition according to the present invention is applied in blow moulding and rotationally moulding applications for use in the industrial packaging market for the manufacturing of intermediate bulk containers (commonly named as IBC's). These large industrial containers may have a capacity between for example 450 and 3000 litres and may be used to transport and to store bulk liquids. The products show good weathering resistance, good environmental stress crack resistance, good rigidity, impact and stacking resistance, good chemical resistance and good colour properties.

Another preferred embodiment is the use of the composition according to the invention in the production of tight head drums, open head drums, jerry cans and fuel tanks.

The invention also relates to the articles obtained with the composition according to the invention.

US 4814367 discloses a high density polyethylene containing chromium catalyst residues is stabilized using a specific stabilizer combination comprising 2,2'-ethylidene-bis(4,6-di-t-butylphenol), a solid polyol having from five to six carbon atoms and one alcoholic hydroxyl on each carbon, and a tris(alkylaryl)phosphite. The composition according to the present invention does not comprise a polyol. US 4814367 teaches that metal soaps have no effect on disclolourisation. A polyvalent metal salt may be added to the specific stabilizer mixture. US 4814367 does not indicate that the problem of yellow discolourisation is solved in case the ethylene polymer composition comprises a carboxylic acid and /or a magnesium salt of a carboxylic acid.

WO 2005/111091 discloses a polyethylene composition comprising an ethylene polymer may contain various additives, including for example stabilizers and antioxidants in order to protect the resins from degradation. WO 2005/111091 teaches that the addition of water at some point in the pelletization process reduces the colour of the resulting resin.

The invention will be elucidated by means of the following non-restrictive examples.

### Examples I-IV and Comparative Examples A-E

1250 ppm of stabiliser package B225 (a phenol-phosphite blend of Ciba comprising Irganox 1010 and Irgafos 168 in a weight ratio 1:1) and an amount of an additive as shown in Table 1 were combined with a chromium catalyst based high density polyethylene (SABIC® B 5210) having a density of 952 kg/m³ and a high melt flow rate (MFR₂₁) of 10 g/10 min.

The compositions were extruded at 160°C in a Haake double-screw extruder having an extruder temperatures profile 140 °C (feed) - 160 °C - 170 °C - 170 °C - 180 °C (die) and wherein the screw speed was 100 rpm. The output was 1 kg/hour. The powder blend was fed under nitrogen.

The extruded granules were tested for normal b* values (according to ASTM D 6290-98). The granules were then compression moulded at 160°C for 30 minutes and cooled to 23°C at 40°C/min into plaques and the b* values of the plaques were measured (direct b* value). The plaques were then aged for 1 and 5 days at 55°C and b* values were measured after the end of each ageing period. All b* value measurements were performed under ambient conditions (23°C).

The colour of the granules and the pressed plaques was determined by measuring the b* value according to ASTM D 6290-98.

**Table 1**

| Example | stabiliser | additive | b* values | | | |
|---|---|---|---|---|---|---|
| | | | normal | ageing | | |
| | B225 | ppm | granules | pressed plaques | | |
| | ppm | | | direct | 1 day | 5 days |
| A | 1250 | None | 1.02 | 1.59 | 1.43 | 1.46 |
| | | | | | | |
| I | 1250 | 500 ppm Mg-acetate | -0.06 | 0.76 | 0.71 | 0.76 |
| II | 1250 | 500 ppm Mg-acetate | -0.06 | 0.77 | 0.66 | 0.78 |
| III | 1250 | 500 ppm Mg-stearate | -0.20 | 0.46 | 0.32 | 0.33 |
| IV | 1250 | 500 ppm Acetic acid | -0.17 | 0.35 | 0.39 | 0.47 |
| | | | | | | |
| B | 1250 | 500 ppm Mg-hydroxide | 0.62 | 1.29 | 1.31 | 1.33 |
| C | 1250 | 500 ppm Mg-oxide | 1.05 | 1.53 | 1.65 | 1.64 |
| D | 1250 | 500 ppm Ca-stearate | 0.31 | 1.02 | 0.96 | 0.97 |
| E | 1250 | 500 ppm Na- acetate | 0.23 | 0.91 | 0.79 | 0.89 |

The values in Table 1 show that
- The b* value of the granules in Examples I-IV is less than 0 whereas the b* value of the granules in Comparative Examples A-E ranges between 0.23 and 1.05.
- The b* value after adding a magnesium salt of carboxylic acid is lower than the b* value after adding of magnesium hydroxide and magnesium oxide.
- The b* value after adding magnesium acetate is lower than the b* value after adding natrium acetate.
- The b* value after adding magnesium stearate is lower than the b* value after adding calcium stearate.
- The compositions in these examples were extruded at 160°C. At higher extrusion temperatures (200-240°C), the effects of addition of whiteners on the b* values are expected to be more pronounced.

## Claims

1. An ethylene polymer composition comprising an ethylene polymer having a density ranging between 940 kg/m³ and 970 kg/m³ obtained in the presence of a chromium-based catalyst system **characterised in that** the composition comprises a carboxylic acid and /or a magnesium salt of a carboxylic acid and the composition does not comprise a polyol.

2. A composition according to Claim 1 **characterised in that** the carboxylic acid is a monocarboxylic acid according to CH₃ (CH₂), COOH wherein n ≥ 0 , a dicarboxylic acid according to HOOC(CH₂)ₘ COOH wherein m ≥ 0 or a tricarboxylic acid.

3. A composition according to Claim 2 **characterised in that** the acid is selected from the group consisting of saturated carboxylic acids of 1 to 22 carbon atoms.

4. A composition according to any one of Claims 1-3 **characterised in that** the carboxylic acid is stearic acid or acetic acid.

5. A composition according to any one of Claims 1-4 **characterised in that** the salt is magnesium stearate or magnesium acetate.

6. A composition according to any one of Claims 1-5 **characterised in that** the composition comprises a phenolic antioxidant.

7. A composition according to any one of Claims 1-6 **characterised in that** the ethylene polymer has the following characteristics:
• a density ranging between 940 kg/m³ and 970 kg/m³ (according to ISO1183),
• a high-load melt index (HLMI) between 0 and 50g/10 min (according to ISO 1133) and
• M_{w} / Mₙ between 8 and 50 (according to size exclusion chromatography measurement).

8. A composition according to any one of Claims 1-7 **characterised in that** the ethylene polymer is obtained by polymerisation of ethylene the presence of a silica-supported chromium-containing catalyst and an alkyl-containing promoter.

9. An article made from a composition according to any one of Claims 1-8.

10. An article according to Claim 9 **characterised in that** the article is an intermediate bulk container, a tight head drum, an open head drum, a jerry can or a fuel tank.

## Patentansprüche

1. Ethylenpolymerzusammensetzung, umfassend ein in Gegenwart eines auf Chrom basierenden Katalysatorsystems erhaltenes Ethylenpolymer mit einer Dichte im Bereich zwischen 940 kg/m³ und 970 kg/m³, **dadurch gekennzeichnet, daß** die Zusammensetzung eine Carbonsäure und/oder ein Magnesiumsalz einer Carbonsäure umfaßt und die Zusammensetzung kein Polyol umfaßt.

2. Zusammensetzung nach Anspruch 1, **dadurch gekennzeichnet, daß** es sich bei der Carbonsäure um eine Monocarbonsäure gemäß CH₃(CH₂)ₙCOOH mit n ≥ 0, eine Dicarbonsäure gemäß HOOC(CH₂)ₘCOOH mit m ≥ 0 oder eine Tricarbonsäure handelt.

3. Zusammensetzung nach Anspruch 2, **dadurch gekennzeichnet, daß** die Säure aus der Gruppe bestehend aus gesättigten Carbonsäuren mit 1 bis 22 Kohlenstoffatomen ausgewählt ist.

4. Zusammensetzung nach einem der Ansprüche 1-3, **dadurch gekennzeichnet, daß** es sich bei der Carbonsäure um Stearinsäure oder Essigsäure handelt.

5. Zusammensetzung nach einem der Ansprüche 1-4, **dadurch gekennzeichnet, daß** es sich bei dem Salz um Magnesiumstearat oder Magnesiumacetat handelt.

6. Zusammensetzung nach einem der Ansprüche 1-5, **dadurch gekennzeichnet, daß** die Zusammensetzung ein phenolisches Antioxidans umfaßt.

7. Zusammensetzung nach einem der Ansprüche 1-6, **dadurch gekennzeichnet, daß** das Ethylenpolymer die folgenden Charakteristika aufweist:
• eine Dichte im Bereich zwischen 940 kg/m³ und 970 kg/m³ (gemäß ISO 1183),
• einen Hochlast-Schmelzindex (HLMI) zwischen 0 und 50 g/10 min (gemäß ISO 1133) und
• M_{w/}Mₙ zwischen 8 und 50 (gemäß Größenausschlußchromatographiemessung).

8. Zusammensetzung nach einem der Ansprüche 1-7, **dadurch gekennzeichnet, daß** das Ethylenpolymer durch Polymerisation von Ethylen in Gegenwart eines siliciumdioxidgeträgerten chromhaltigen Katalysators und eines alkylgruppenhaltigen Promotors erhalten worden ist.

9. Gegenstand, hergestellt aus einer Zusammensetzung nach einem der Ansprüche 1-8.

10. Gegenstand nach Anspruch 9, **dadurch gekennzeichnet, daß** es sich bei dem Gegenstand um ein Großpackmittel, ein Spundfaß, ein Deckelfaß, einen Kanister oder einen Kraftstofftank handelt.

## Revendications

1. Composition de polymère d'éthylène comprenant un polymère d'éthylène ayant une densité comprise entre 940 kg/m³ et 970 kg/m³ obtenu en présence d'un système catalyseur à base de chrome, **caractérisée en ce que** la composition comprend un acide carboxylique et/ou un sel de magnésium d'un acide carboxylique et la composition ne comprend pas un polyol.

2. Composition selon la revendication 1 **caractérisée en ce que** l'acide carboxylique est un acide monocarboxylique selon CH₃(CH₂)ₙCOOH dans lequel n ≥ 0, un acide dicarboxylique selon HOOC(CH₂)ₘCOOH dans lequel m ≥ 0, ou un acide tricarboxylique.

3. Composition selon la revendication 2 **caractérisée en ce que** l'acide est choisi dans le groupe constitué par les acides carboxyliques saturés de 1 à 22 atomes de carbone.

4. Composition selon l'une quelconque des revendications 1 à 3 **caractérisée en ce que** l'acide carboxylique est l'acide stéarique ou l'acide acétique.

5. Composition selon l'une quelconque des revendications 1 à 4 **caractérisée en ce que** le sel est le stéarate de magnésium ou l'acétate de magnésium.

6. Composition selon l'une quelconque des revendications 1 à 5 **caractérisée en ce que** la composition comprend un antioxydant phénolique.

7. Composition selon l'une quelconque des revendications 1 à 6 **caractérisée en ce que** le polymère d'éthylène a les caractéristiques suivantes :
• une densité comprise entre 940 kg/m³ et 970 kg/m³ (selon ISO 1183),
• un indice de fluidité sous forte charge (IFFC) entre 0 et 50 g/10 min (selon ISO 1133), et
• un M_{w/}Mₙ entre 8 et 50 (selon une mesure par chromatographie d'exclusion stérique).

8. Composition selon l'une quelconque des revendications 1 à 7 **caractérisée en ce que** le polymère d'éthylène est obtenu par polymérisation d'éthylène en présence d'un catalyseur contenant du chrome sur support de silice et d'un activateur contenant un alkyle.

9. Article fabriqué à partir d'une composition selon l'une quelconque des revendications 1 à 8.

10. Article selon la revendication 9 **caractérisé en ce que** l'article est un grand récipient pour vrac, un fût à dessus non amovible, un fût à dessus amovible, une nourrice ou un réservoir de carburant.
